# EUROPÄISCHE PATENTSCHRIFT

(11) **EP 1 723 290 B1**
(45) Veröffentlichungstag und Bekanntmachung des Hinweises auf die Patenterteilung: **18.03.2009**
(21) Anmeldenummer: 05729051.2
(22) Anmeldetag: 09.03.2005
(51) Int. Cl.: E04D 3/36, E04D 5/14, F16B 13/00, B05C 17/12, B05C 17/005

(54) **ABDICHTTELLER F R EIN BEFESTIGUNGSELEMENT, EIN MIT DIESEM GE BILDETES BEFESTIGUNGSELEMENT UND HIERF R GEEIGNETE MONTAGEHI LFSVORRICHTUNG**
SEALING PLATE FOR A FIXING ELEMENT, FIXING ELEMENT FORMED THEREBY, AND AUXILIARY ASSEMBLY DEVICE THEREFOR
DISQUE D'ETANCHEITE POUR ELEMENT DE FIXATION, ELEMENT DE FIXATION FORME AVEC CE DISQUE ET DISPOSITIF AUXILIAIRE DE MONTAGE APPROPRIE Y RELATIF

(30) Priorität: 11.03.2004 DE 202004003975 U; 02.02.2005 DE 202005001698 U
(43) Veröffentlichungstag der Anmeldung: 22.11.2006
(73) Patentinhaber: Harald Zahn GmbH, 69168 Wiesloch (DE)
(72) Erfinder: ZAHN, Harald, 69168 Wiesloch (DE)
(86) Internationale Anmeldenummer: PCT/DE2005/000424
(87) Internationale Veröffentlichungsnummer: WO 2005/088024

(56) Entgegenhaltungen:
- EP-A- 0 412 382
- EP-A- 0 658 667
- WO-A-80/01491
- GB-A- 2 202 488
- US-A- 4 963 062
- US-A- 5 040 299

## Beschreibung

Die Erfindung betrifft eine Anordnung, für die trittsichere und/oder trittfeste mechanische Befestigung von Dämmmaterialien und Dichtungsbahnen auf Flachdächern außerhalb des Bahnensaumbereiches.

Es ist bekannt Dämm- und Dichtungsmaterialien außerhalb des Saumbereiches, dies ist der randseitige Überlappungsbereich der Dichtungsbahnen, zu befestigen. Dabei wird die Dichtungsbahn von sich im Dachuntergrund verankernden Befestigungselementen durchstochen, die danach freiliegen, d.h. nicht wie sonst üblich, durch den Bahnenrand der an die befestigte Bahn anschließenden nächsten Bahn überlappt werden. Diese s.g. Feld- oder Flächenbefestigung muss dann durch geeignete, meist aufwendige Maßnahmen abgedichtet werden.

### STAND DER TECHNIK

In der DE 29 05 068 C2 ist eine Vorrichtung zum Befestigen einer Abdichtbahn an einer Unterlage beschrieben. Eine Bohrschraube besitzt dabei an ihrem der Bohrspitze fernen Ende ein Außengewinde, womit die Schraube in einen Teller eingeschraubt wird und zusammen mit diesem ein Befestigungselement bildet. Nachdem die Befestigungsstelle mit einem Bindemittel beaufschlagt wurde, wird der Teller zusammen mit der Schraube in Rotation versetzt, wobei die Schraube die Abdichtbahn und das darunter befindliche Dämmmaterial durchsticht. Die Schraube schneidet sich in ein den Dachuntergrund bildendes Stahltrapezblech ein und verankert das Befestigungselement. Dabei wird zwischen Teller und Abdichtbahn eine wasserdichte Verbindung hergestellt. Die hergestellte Fixierung bildet einen relativ starren Befestigungspunkt, was sich insbesondere bei hohen Windsogkräften als sehr nachteilig im Hinblick auf die Haltbarkeit des Befestigungspunktes an sich und die Dauerhaftigkeit der abgedichteten Befestigungszone herausstellen kann. Darüber hinaus bildet der Teller nach der Montage eine höchst gefährliche Stolperfalle. Dies birgt nicht nur die Gefahr, dass der Befestigungspunkt beschädigt werden kann. Gerade im Dachbereich können solche Gefahrenstellen zu Abstürzen führen, insbesondere deshalb, da die Feldbefestigungen bevorzugt im Rand- und Eckbereich eingesetzt werden. Um die frische Klebe- bzw. Schweißstellestelle nicht zu gefährden, kann auch nicht unmittelbar nach dem Setzvorgang geprüft werden, ob die mechanische Befestigung ordnungsgemäß hergestellt wurde. In der EP 0 412 382 A1, die eine Anordnung nach dem Oberbegriff des Anspruchs 1 offenbart, ist eine Befestigungseinrichtung beschrieben, bestehend aus einem Kunststoffhalter mit Schraube und einem Abdichtteller. Der Kunststoffhalter besitzt eine Kopfplatte mit daran angeformten Hohlschaft, in den die Schraube eingeführt ist, mit ihrer Spitze aus dem Ende des Hohlschaft austritt und sich mit dem Kopf auf einer Schulter innerhalb des Hohlschaftes abstützt. Die Schraube verankert sich durch Eindrehen in den Untergrund und presst dabei die Kopfplatte in Richtung Dachuntergrund. Ferner besitzt der Hohlschaft ein Innengewinde, in den der Abdichtteller eingedreht wird. Hierzu besitzt der Abdichtteller einen Zapfen, an dem ein Außengewinde angeordnet ist.
Der Abdichtteller, welcher mit der Dachbahn verklebt wird, ist aus einem relativ starren festen Kunststoff geschaffen, um eine haltbare Verbindung mit dem Kunststoffhalter herstellen zu können. Diese Eigenschaft ist jedoch nachteilig bei der Verbindung mit der flexiblen Dachbahn.
In der EP 0 658 667 A1 ist ein Isolierdorn mit einer Abdeckkappe mit einem in den Dom einführbaren Zapfen beschrieben, welche aus einem elastisch nachgiebigen Material beschaffen ist. Dadurch ist es erforderlich den Isolierdorn, insbesondere dessen Spreizdornabschnitt in den der Zapfen eingeführt wird, relativ aufwendig auszugestalten, damit eine zuverlässige
Verbindung zwischen Abdeckkappe und Spreizhülse hergestellt werden kann.

### AUFGABENSTELLUNG

Der vorliegenden Erfindung liegt die Aufgabe zu Grunde, eine Anordnung anzugeben, womit eine zuverlässige und dauerhaft dichte mechanische Feldbefestigung von Dämm- und Dichtungsmaterial auf einem Flachdach möglich ist, die sich dabei rationell durchführen lässt.

Diese Aufgabe wird durch die Erfindung mit den Merkmalen des Hauptanspruchs gelöst.
Es stellt sich als Vorteil der Erfindung dar, dass die eigentliche mechanische Befestigung des Dämm- und Dichtungsmaterials unabhängig von der Abdichtung der Befestigungsstelle durchführbar ist. Damit ist zunächst eine fortlaufende rationelle Verlegung sichergestellt. Das s.g. Setzen der mit jeweils einer Schraube bestückten Kunststoffhalter kann mit den üblichen Geräten bis hin zur manuellen Montage erfolgen, da der Kunststoffhalter selbst in unveränderter Form mit dem Abdichtteller verwendet werden kann. Der Abdichtteller selbst überdeckt nach dem Aufsetzen die Kopfplatte des Kunststoffhalters haubenförmig und bettet die Kopfplatte vollständig ein, wobei der Abdichtteller zumindest mit seiner die Kopfplatte des Kunststoffhalters radial umgebenden Randunterseite mit dem Abdichtmaterial wasserdicht verschweißt und/oder verklebt wird. Die Kopfplatte des Kunststoffhalters presst die Abdichtbahn und das Dämmmaterial in Richtung Dachuntergrund, da sich die im Kunststoffhalter eingesetzte Schraube auf einer Ringschulter im Hohlschaft abstützt und beim Eindrehen in den Dachuntergrund den Kunststoffhalter gegen den Dachuntergrund anzieht. Dabei wird zwischen Kopfplatte und Stahltrapezblech das Dämmmaterial und die Abdichtungsbahn eingeklemmt. Da die Kopfplatte die mechanischen Befestigungskräfte ausübt, wird die Klebe-bzw. Schweißstelle zwischen Abdichtbahn und Abdichtteller weitestgehend entlastet. Erfindungsgemäß ist erkannt worden, dass mit dem vorgeschlagenen Befestigungselement eine solche mechanische Befestigung des Dämm- und Dichtungsmaterial hergestellt wird, bei der sich die Verteilung und Aufnahme der auftretenden Windsogkräfte sowohl äußerst günstig gegenüber dem mechanischen Befestigungspunkt als auch zur abgedichteten Zone verhält. Ein besonderer Vorteil der Erfindung besteht darin, dass die korrekte mechanische Befestigung unabhängig von der Abdichtung als solche überprüfbar ist. Der herausragende Vorteil der Erfindung besteht insbesondere darin, dass der Abdichtteller auf einfachste Weise mit dem Kunststoffhalter adaptierbar ist, in dem dieser einfach auf diesen aufsetzbar ist, ohne eine Schraubbewegung ausführen zu müssen. Dies macht komplizierte Verarbeitungsgeräte überflüssig. Nachdem die Schrauben mit den Kunststoffhaltern fixiert sind, kann ein nachfolgender Monteur die Befestigungsstellen vorbereiten und die Abdichtteller einfach auf die Kunststoffhalter aufsetzen. Der notwendige Anpressdruck wird dadurch erzielt, dass der Monteur den Teller kurz mit der Hand anpresst. Ganz besonders wichtig ist, dass das erfindungsgemäße Befestigungselement bzw. der vorgeschlagene Abdichtteller sich der durch Windkräfte erzeugten Bewegung der Abdichtbahn individuell anpasst. Hierzu ist der Abdichtteller im wesentlichen biegeelastisch, was durch ein flexibles Tellermaterial aus dem gleichen Material wie die Abdichtbahn, oder durch entsprechend flexible Tellerabschnitte erreicht wird. Hier kommen Kompositausführungen in Frage. Der erfindungsgemäße Abdichtteller bildet eine homogene Fortsetzung der flächigen Abdichtbahn, da die Kopfplatte des Kunststoffhalters vollständig im Teller eingebettet ist und der Teller keine übermäßigen Erhöhungen und Vorstände besitzt. Lediglich eine leichte konvexe Wölbung erhebt sich im Bereich des Befestigungspunktes. Dadurch bleibt das mit der Erfindung bearbeitete Dach frei von Stolperstellen. Durch die Kompatibilität des Abdichttellers mit dem Kunststoffhalter für die trittsichere mechanische Befestigung, können alle Vorteile einer trittsicheren Befestigung bzw. im Zusammenhang mit dem auf den Kunststoffhalter aufgesetzten Dübel die einer trittfesten Befestigung erhalten werden. Gegenüber mechanischen Befestigungen des Standes der Technik mit durchgehenden Schrauben ist die Korrosionsgefahr nahezu eliminiert. Die Gefahr von Kälte-Wärmebrücken ist auf ein Minimum reduziert.
Zur Unterstützung der Adaption ist bei der Erfindung vorgesehen werden, an der Unterseite des Abdichttellers einen Zapfen anzuordnen. Mit diesem Zapfen wird der Abdichtteller auf der Kopfplatte des Kunststoffhalters zentriert, so dass eine Koaxialität beider Teile zueinander gesichert wird. Der Außendurchmesser des Zapfens ist dabei geringer ausgelegt als der Innendurchmesser des Hohlschaftes. Eine Verbindung zwischen Teller und Kunststoffhalter ist hierbei nicht angedacht.

Eine vorteilhafte Ausgestaltung der Erfindung sieht vor, dass zwischen dem Abdichtteller und dem Kunststoffhalter eine Kraft- und/oder formschlüssige Verbindung herstellbar ist. Dies wird durch ein Übermaß des Zapfendurchmessers bei einer kraftschlüssigen Verbindung oder über geeignete Retentionsmittel bei einer formschlüssigen Verbindung erreicht, die mit entsprechenden Vorsprüngen oder Vertiefungen z.B. im Hohlschaft des Kunststoffhalters zusammenwirken. Es wurde erfindungsgemäß auch erkannt, dass der Zapfen so tief im Kunststoffhalter einragen muss, dass bei einem durch Windsogkräfte bewirkten Anheben des Abdichttellers die Zentrierung zum Kunststoffhalter nicht verloren gehen darf. Zur Unterstützung der gleichmäßigen Verteilung des z.B. verwendeten Quellschweißmittels, ist bei einer weiteren Ausführungsform der Erfindung vorgesehen, dass der Abdichtteller auf seiner die Kopfplatte des Kunststoffhalters radial umgebenden Randunterseite, welche eine Auflagefläche zum Dichtungsmaterial bildet, mindestens ein radial verlaufender Kanal für die Aufnahme von Klebe- oder Lösungsmittel besitzt. Es sind für die Montage des Abdichttellers auf den Kunststoffhalter keinerlei Gerätschaften erforderlich. Zur Unterstützung der Handhabefreundlichkeit des Abdichttellers können auf der Telleroberseite leicht kalottenförmige Erhebungen angeordnet werden, die z.B. ein manuelles Drehen der Teller mit dem Handballen erleichtern. Diese Erhebungen besitzen allerdings eher die Eigenschaft einer unglatten Telleroberfläche, um die Griffigkeit des Tellers zu erhöhen.

Der erfindungsgemäße Abdichtteller kann auch für den Einsatz für eine Reibschweißverbindung herangezogen werden. Dabei wird der Abdichtteller in Rotation versetzt. Durch die auftretende Reibungshitze zwischen der Tellerunterseite und der Oberfläche der Abdichtbahn wird eine Reibverschweißung der Komponenten miteinander erzielt. Dies wird insbesondere dadurch unterstützt, dass der Abdichtteller zumindest partiell aus dem gleichen Material wie die Abdichtbahn beschaffen ist. Zumindest sollte jedoch ein solches Material gewählt werden, das diesen Reibschweißeffekt untereinander zulässt. Bei Ausführungsformen des erfindungsgemäßen Abdichttellers mit glatter Oberflächenstruktur, können diese z.B. von einer Vakuumsaugglocke erfasst und in Rotation versetzt werden. Geeignet sind auch Vertiefungen auf der Telleroberseite, die eine formschlüssige Mitnehmung durch ein Antriebswerkzeug erlauben.
Durch die Kompatibilität des erfindungsgemäßen Abdichttellers mit den an sich bekannten Kunststoffschraubkombinationen wir ein Befestigungselement geschaffen, dessen Komponenten einzeln oder zusammen eingesetzt werden können. Ein besonderer Vorteil besteht dabei darin, dass die gesamte Dachfläche mit ein und demselben Befestiger fixiert werden kann. Wenn z.B. mit Setzgeräten gearbeitet wird, so kann mit einem einzigen Gerät die komplette Dachfläche bearbeitet werden.
Weitere Vorteile und vorteilhafte Ausgestaltungen der Erfindung sind der nachfolgenden Beschreibung, der Zeichnung und den Ansprüchen entnehmbar.

### AUSFÜHRUNGSBEISPIEL

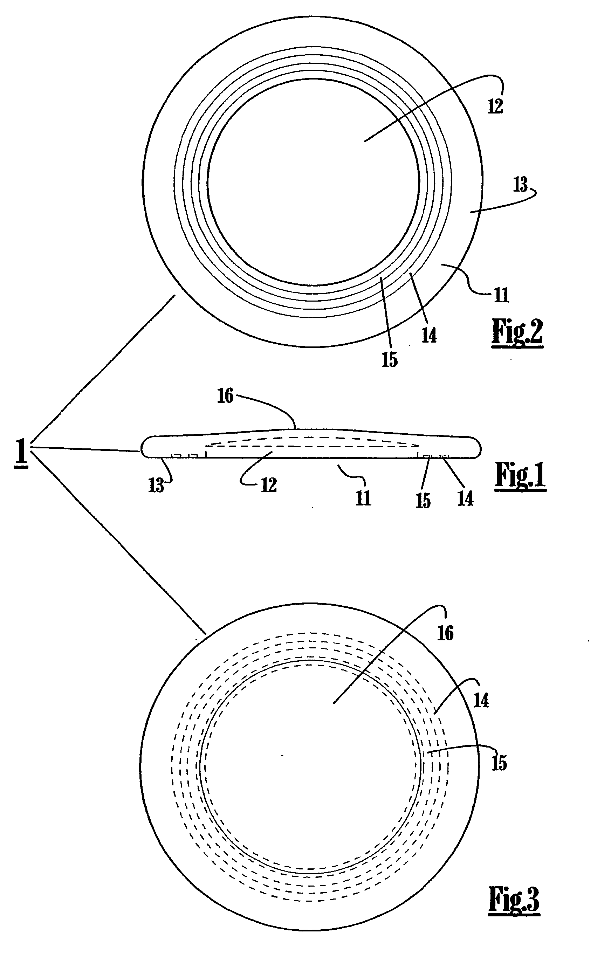

Es gibt verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung an Hand der Zeichnung, werden auch im Allgemeinen bevorzugte Ausgestaltungen und Weiterbildungen der Lehre erläutert. Die erste Ausführungsform (Figur 1 bis 3) gehört nicht zur beanspruchten Erfindung, weil der Abdichtteller dieser Ausführungsform keinen Zapfen aufweist.
In der Zeichnung zeigen:
Figur 1 eine Seitenansicht des erfindungsgemäßen Abdichttellers in einer ersten Ausführungsform,
Figur 2 eine Unteransicht des in Figur 1 dargestellten Abdichttellers,
Figur 3 eine Draufsicht des in Figur 1 dargestellten Abdichttellers,
Figur 4 eine Seitenansicht des erfindungsgemäßen Abdichttellers in einer zweiten Ausführungsform,
Figur 5 eine Unteransicht des in Figur 4 dargestellten Abdichttellers,
Figur 6 eine Draufsicht des in Figur 4 dargestellten Abdichttellers,
Figur 7 eine Seitenansicht des erfindungsgemäßen Abdichttellers in einer dritten Ausführungsform,
Figur 8 eine Unteransicht des in Figur 7 dargestellten Abdichttellers,
Figur 9 eine Draufsicht des in Figur 7 dargestellten Abdichttellers,
Figur 10 eine Seitenansicht des erfindungsgemäßen Abdichttellers in einer vierten Ausführungsform,
Figur 11 eine Unteransicht des in Figur 10 dargestellten Abdichttellers,
Figur 12 eine Draufsicht des in Figur 10 dargestellten Abdichttellers,
Figur 13 eine Seitenansicht des erfindungsgemäßen Abdichttellers in einer fünften Ausführungsform,
Figur 14 eine Unteransicht des in Figur 13 dargestellten Abdichttellers,
Figur 15 eine Draufsicht des in Figur 13 dargestellten Abdichttellers,
Figur 16 eine Seitenansicht des erfindungsgemäßen Abdichttellers in einer weiteren Ausführungsform, die sich insbesondere auch für das Reibschweißen eignet,
Figur 17 eine Unteransicht des in Figur 16 dargestellten Abdichttellers,
Figur 18 eine Draufsicht des in Figur 16 dargestellten Abdichttellers,
Figur 19 einen Kunststoffhalter mit Schraube, auf den der erfindungsgemäße Abdichtteller adaptiert wird,
Figur 20 eine Unteransicht des in Figur 19 dargestellten Kunststoffhalters,
Figur 21 eine Draufsicht des in Figur 19 dargestellten Kunststoffhalters,
Figur 22 zeigt eine Kunststoffschraubkombination, bestehend aus einem Kunststoffhalter mit Schraube und Dübel,
Figur 23 zeigt ein mit dem Abdichtteller gebildetes Befestigungselement in einer ersten Ausführungsform,
Figur 24 zeigt ein mit dem Abdichtteller gebildetes Befestigungselement in einer zweiten Ausführungsform,
Figur 25 zeigt eine Montagehilfsvorrichtung zum Auftragen von Quellschweißmittel für das Verbinden des Abdichttellers mit der Abdichtbahn und
Figur 26 ein Ausschnitt eines mechanisch befestigten Dachaufbaus.

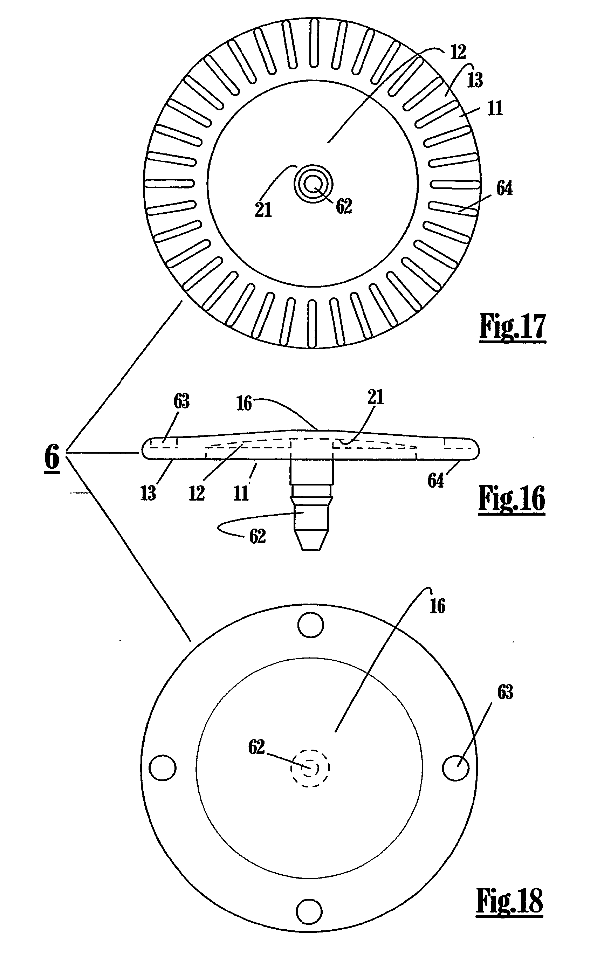

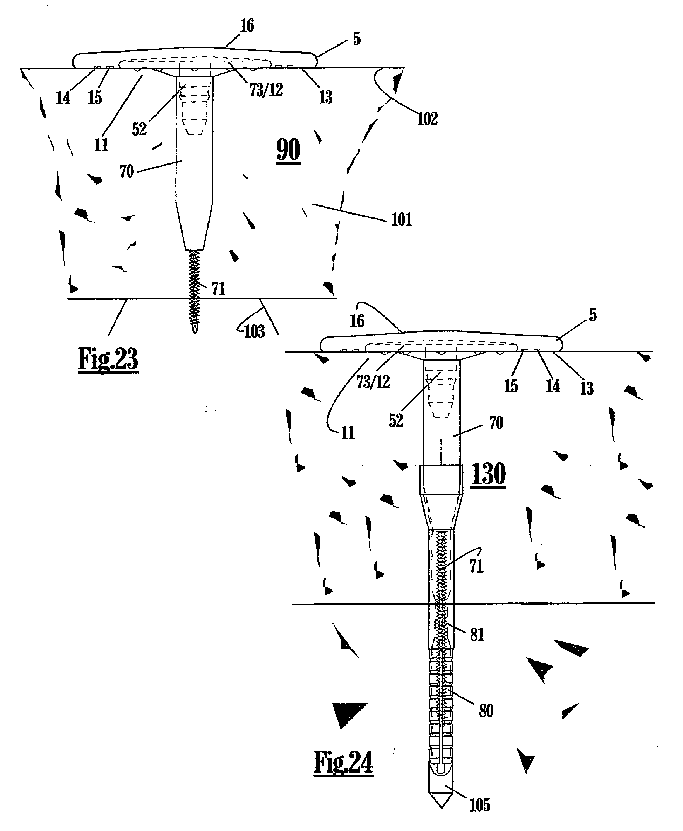

Die Figuren 1-3 zeigen einen Abdichtteller 1 in einer ersten Ausführungsform. Dieser ist von kreiszylindrischer Form und besitzt eine zur Tellerunterseite 11 hin offene Kammer 12. In den die Kammer 12 radial umgebenden Tellerrand 13 sind zwei Radialnuten 14,15 eingelassen. Der Abdichtteller 1 ist eine nahezu flächige Scheibe mit einer leichten im Zentrum, sich über die Kammer 12 erstreckende konvexen Erhebung 16 und wird mit der Kopfplatte des Kunststoffhalters (siehe Figur 23 und 24) adaptiert. Die Kammer 12 stellt dabei die Negativform der hierin aufzunehmenden Kopfplatte des Kunststoffhalters dar. Bevorzugt wird eine die Kopfplatte umgebende kreisförmige Ringfläche der Abdichtbahn mit Quellschweißmittel beaufschlagt und der Abdichtteller auf diese Stelle aufgedrückt. Der sich koaxial zur Kopfplatte befindliche Abdichtteller 1 verbindet sich relativ rasch mit der Abdichtbahn im Bereich seines die Kopfplatte radial umgebenden Tellerrandes 13. Das Quellschweißmittel fließt dabei auch in die Radialnuten 14,15 ein, wobei im Zusammenspiel dieser Nuten und dem verbleibenden Tellerrand eine Labyrinthdichtung gebildet wird. Der Abdichtteller 1 mit seinen wesentlichen Merkmalen ist, soweit nicht anders erläutert, auch auf die folgenden Ausführungsformen zu übertragen. Entsprechend sind in den nachfolgenden Figuren für die gleichen Merkmale die gleichen Bezugszeichen verwendet und werden nicht wiederholt beschrieben.

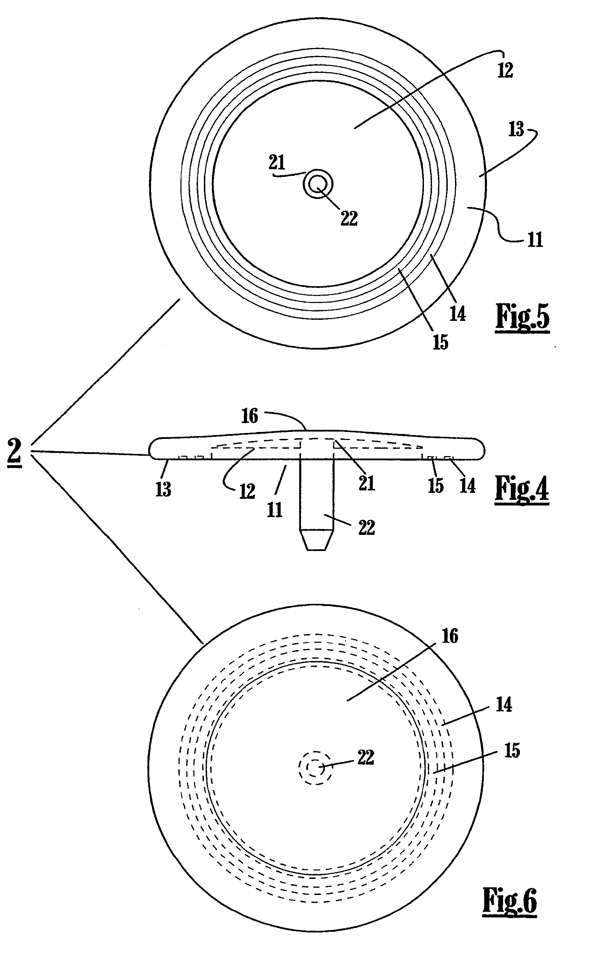

Die Figuren 4-6 zeigen eine weitere Ausführungsform eines Abdichttellers 2. Bei dieser Variante ist ein auf der Tellerunterseite 11, zentrischer, sich vom Kammerscheitel 21 abwärts erstreckender zylindrischer Zapfen 22 angeordnet. Bei der Adaption des Abdichttellers 2 dient der Zapfen 22 als Zentrierung und wird hierzu in die Hohlkammer des Kunststoffhalters eingeführt. Bei dieser Ausführungsform ist eine Berührung oder gar ein Zapfenübermaß gegenüber dem Hohlschaftinnendurchmesser nicht zwingend erforderlich. Während dieser Teller vor dem verschweißen frei gegenüber dem Kunststoffhalter rotierbar ist, kann der Zapfen auch mit geringem Übermaß ausgebildet sein, um eine kraftschlüssige Verbindung zwischen Abdichtteller und Kunststoffhalter zu schaffen.

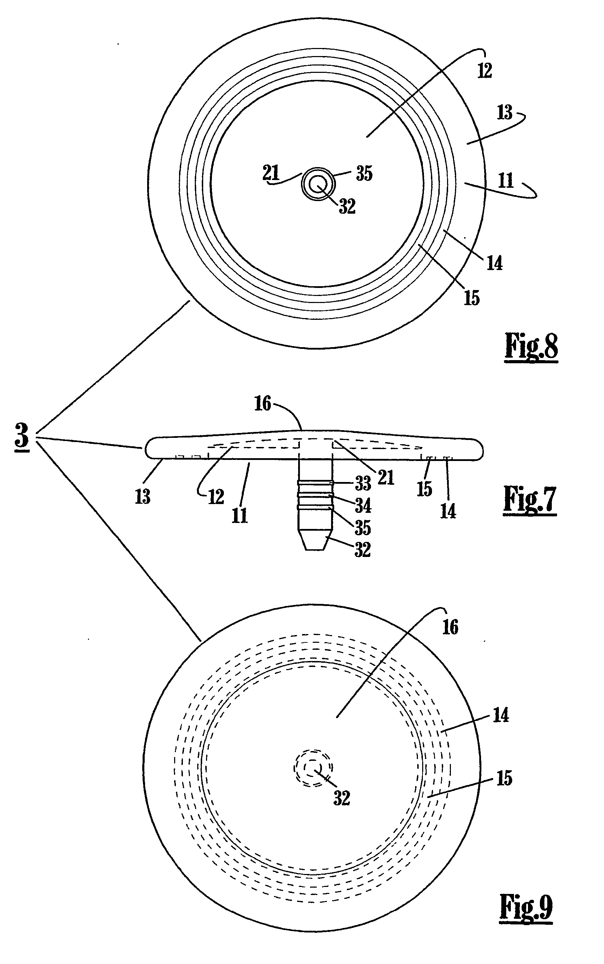

Die Figuren 7-9 geben eine Ausführungsform eines weiteren Abdichttellers 3 wieder. Hierbei besitzt der Zapfen 32 auf seinem Außenmantel übereinander und von einander beabstandete, radial um den Zapfen 32 verlaufende Ringe 33,34,35. Diese Ringe stellen, ohne dass innerhalb des Hohlschaftes des Kunststoffhalters Rückhaltemittel angebracht sind, eine kraftschlüssige Verbindung zwischen Abdichtteller 3 und Kunststoffhalter her, wenn der Außendurchmesser gegenüber dem Hohlschaftinnendurchmesser ein geringes Übermaß besitzt.

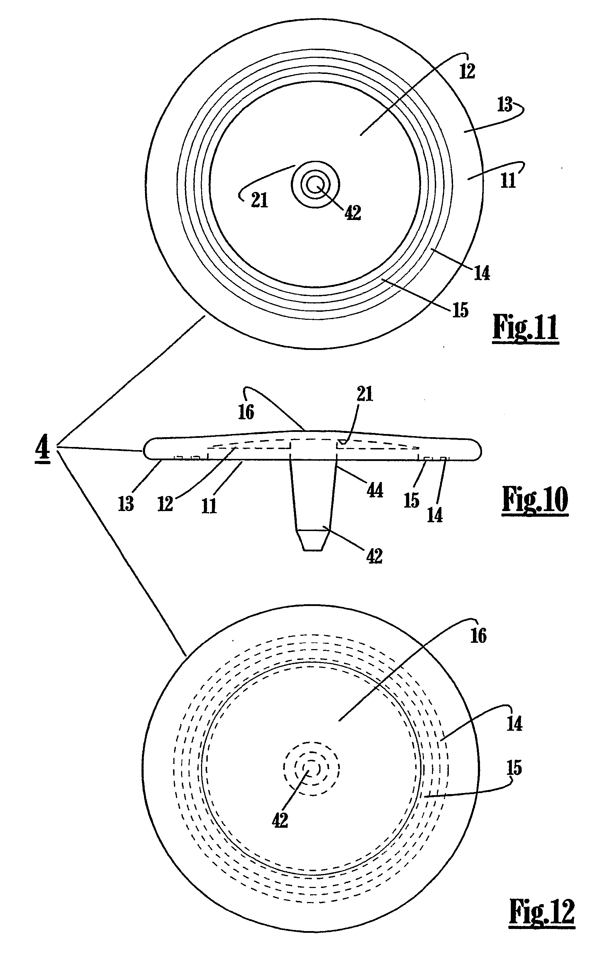

Die Figuren 10-12 geben eine Ausführungsform eines weiteren Abdichttellers 4 wieder. Hierbei besitzt der Zapfen 42 eine konische Formgebung, so dass bevorzugt erst im Bereich des oberen Zapfenhalses 44 ein Übermaß gegenüber dem Hohlschaftinnendurchmesser vorliegt, was zu einer kraftschlüssigen Verbindung mit dem Kunststoffhalter führt.

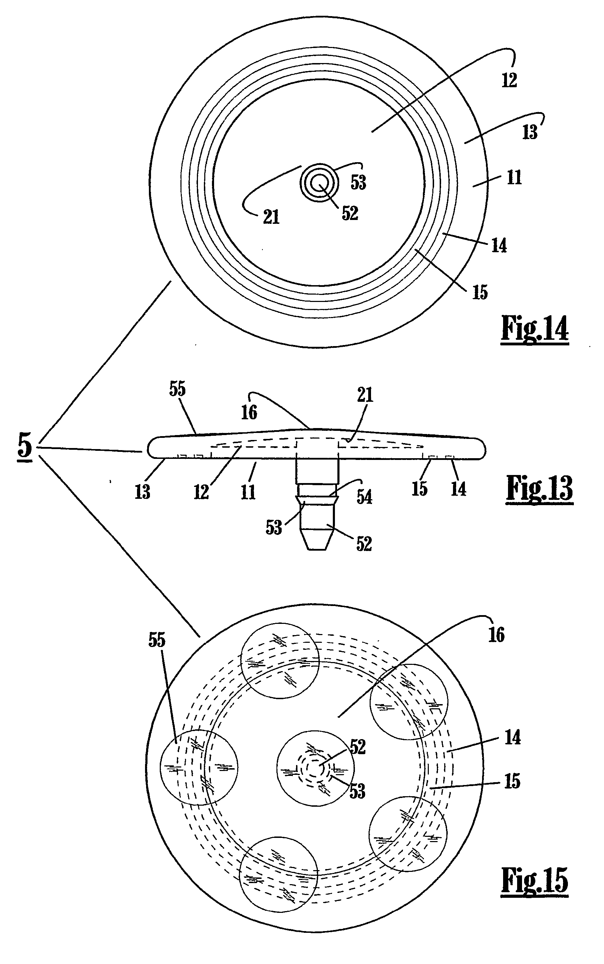

Die Figuren 13-15 geben eine Ausführungsform eines weiteren Abdichttellers 5 wieder. Der Zapfen 52 besitzt Retentionsmittel 53 in Form einer Sägeverzahnung. Nach Adaption mit dem Kunststoffhalter hintergreift der an der Verzahnung gebildete Absatz 54 entsprechende Vorsprünge im Hohlschaft des Kunststoffhalters. Mit 55 sind leicht kalottenförmige Erhebungen bezeichnet, die ein manuelles oder maschinelles Drehen der Teller unterstützen.
Die Ausführungsformen gemäß den Figuren 1-12 eignen sich mit ihren glatten Oberflächen auch zum Antrieb über eine rotierende Vakuumsaugglocke.
Die Ausführungsform gemäß den Figuren 16-18 zeigen eine Variante, die sich zur Verbindung per Reibschweißtechnik eignet. Der Abdichtteller 6 besitzt dabei einen Zapfen 62, der Mittel besitzt, die innerhalb des Hohlschaftes des Kunststoffhalters einen Vorsprung hintergreifen. Allerdings ist der Zapfen mit seinem Durchmesser so ausgelegt, dass der Teller frei im Kunststoffhalter rotieren kann. Um eine für das Reibschweißen geeignete Rotationsgeschwindigkeit erreichen zu können, sollte der Abdichtteller 6 maschinell angetrieben werden. Hierzu besitzt dieser radial verteilte Vertiefungen 63, in die das Antriebswerkzeug eingreifen kann. Um die Reibschweißqualität zu verbessern, besitzt der Abdichtteller 6 auf seiner Unterseite Erhebungen 64, bevorzugt in Form von Lamellen.

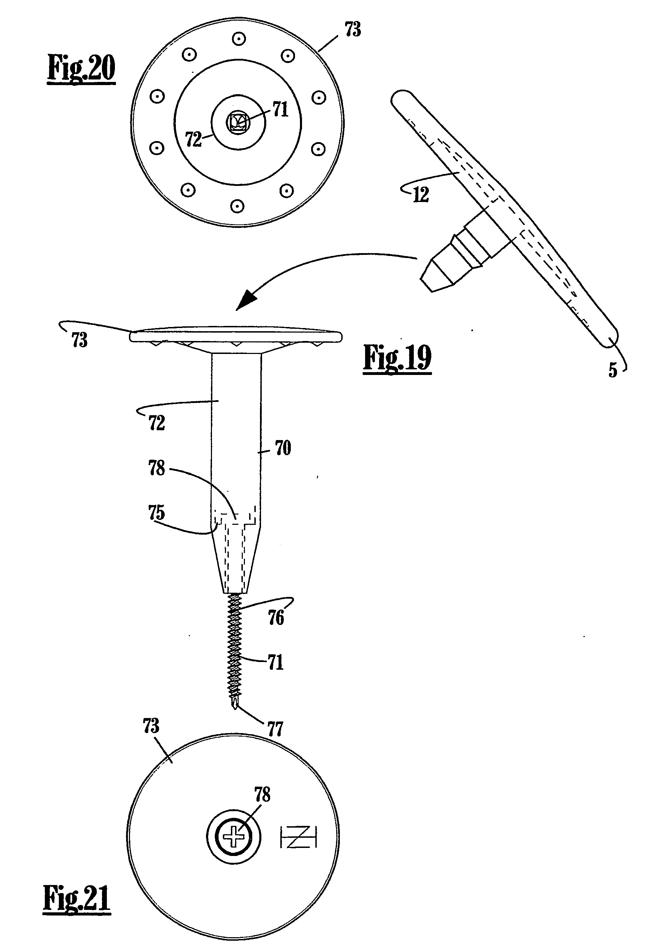

Die Figuren 19-21 zeigen einen Kunststoffhalter 70 mit Schraube 71, auf den der Abdichtteller 5 adaptiert wird. Der Kunststoffhalter besteht aus einem Hohlschaft 72 mit angeformter Kopfplatte 73. Die Schraube 71 ist in den Hohlschaft 72 eingesetzt und dort versenkt aufgenommen, wobei sich der Schraubenkopf 74 auf einer Ringschulter 75 abstützt. Der Schraubenschaft 76 tritt mit seiner Bohrspitze 77 aus dem der Kopfplatte fernen Ende des Hohlschaftes 72 aus dem Kunststoffhalter 70 aus. Die Kopfplatte 73 besitzt ein kreiszylindrisches Profil und wird innerhalb der Kammer 12 des Abdichttellers 5 aufgenommen.

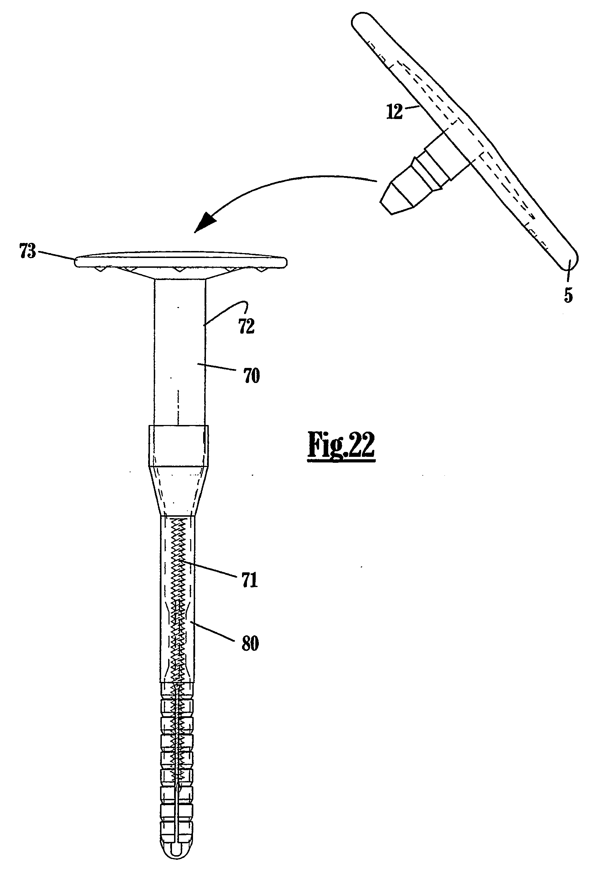

Die Figur 22 zeigt den Kunststoffhalter 70 mit einem Dübelvorsatz 80. Der Dübelvorsatz 80 wird auf die Schaftspitze des Kunststoffhalters 70 aufgesteckt. Der aus dem Kunststoffhalter austretende Schaft der Schraube 71 dringt in den Dübelvorsatz 80 ein. In der Montageendlage wird der untere Abschnitt des Dübelvorsatzes durch die Schraube 71 aufgespreizt und verankert sich im Dachuntergrund, beispielsweise in einer Betondecke.

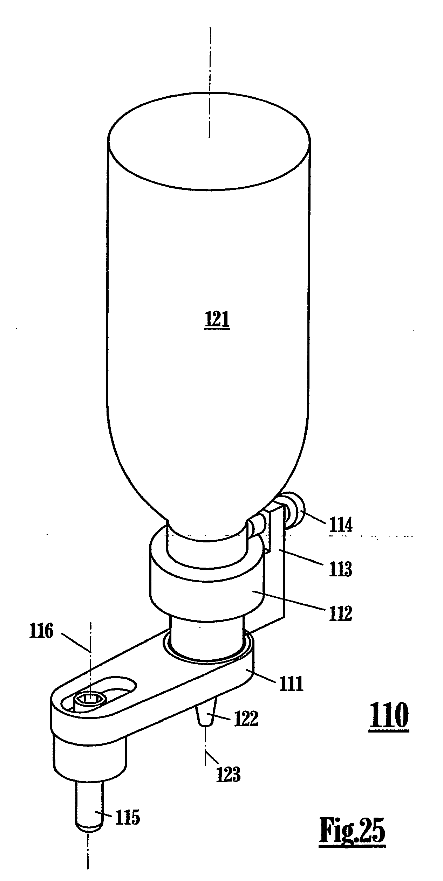

Figur 23 zeigt ein Befestigungselement 90, bestehend aus Kunststoffhalter 70, Schraube 71 und Abdichtteller 5. Zunächst wird der mit der Schraube 71 vormontierte Kunststoffhalter 70 durch einen an sich bekannten Setzvorgang dazu verwendet, das Dämmmaterial 101 und die Abdichtung 102 mechanisch auf dem Dachuntergrund 103, hier ein Stahltrapezblech, zu befestigen. Nach erfolgtem Setzvorgang wird die Befestigungsstelle dadurch abgedichtet, indem der Abdichtteller 5 mit dem Kunststoffhalter 70 bzw. dessen Kopfplatte 73 adaptiert wird. Die Kopfplatte 73 wird dabei derart haubenartig vom Abdichtteller 5 aufgenommen, dass der Abdichtteller 5 mit seinem die Kopfplatte 73 radial umgebenden Tellerrand 13 auf der Abdichtung 102 aufliegt. Zuvor wurde die Auflagezone um die Kopfplatte 73 herum mit einem Quellschweißmittel beaufschlagt. Hierzu eignet sich besonders die in Figur 25 wiedergegebene Hilfsvorrichtung 110. Auf einer Kurbel 111 ist eine mit ihrer Auslassöffnung 122 nach unten gerichtete Flasche 121 mit Quellschweißmittel aufgesetzt. Hierzu besitzt die Kurbel eine um die Flaschenachse 123 frei drehbare Aufnahme 112 mit einer ausragenden Kluppe 113, durch welche hindurch eine Rändelmutter 114 die Flasche fixiert. Auf dem der Aufnahme gegenüberliegenden Ende verläuft koaxial zu der mit 116 bezeichneten Rotationsachse ein Bolzen 115, der in den Hohlschaft des Kunststoffhalters eingesetzt wird. Durch rotieren der Kurbel 111 um die Achse 116 bei gleichzeitigem Auspressen des Quellschweißmittels aus der Flasche 121, wird dieses gleichmäßig um die abzudichtende Befestigungsstelle verteilt und der Abdichtteller 5 kann auf den Kunststoffhalter aufgesetzt werden.
Ähnlich wird bei der Montage des in Figur 24 wiedergegebenen Befestigungselementes 130 verfahren. Allerdings unterscheidet sich hierbei der Setzvorgang des mit dem Vorsatzdübel 80 vormontierten Kunststoffhalters 70. Zunächst wird in den Dachuntergrund 104, hier Beton, ein Sackloch 105 vorgebohrt. Danach wird der mit dem Vorsatzdübel 80 und Schraube 71 vormontierte Kunststoffhalter 70 in die vorbereitete Befestigungsstelle eingesetzt. Die Schraube greift dabei in Rippen 81 des Dübels 80 ein, die oberhalb des spreizbaren Bereichs liegen. Danach wird die Schraube 71 angezogen und der Dübel verankert sich durch Spreizung im Sackloch 105 des Dachuntergrundes 104. Jetzt wird die Befestigungsstelle wie beschrieben vorbereitet und der Abdichtteller 5 mit dem Kunststoffhalter 70 adaptiert.

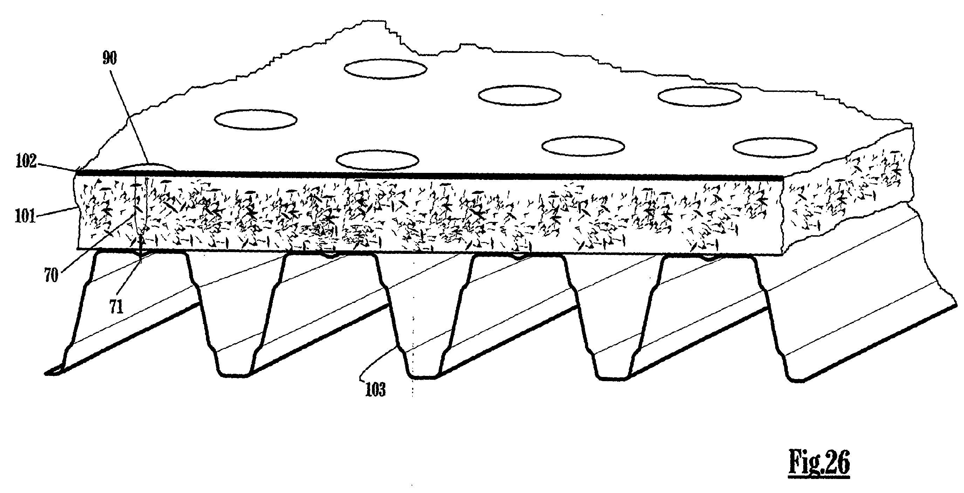

Die Figur 26 zeigt einen Ausschnitt eines Daches, bei dem das Dämmmaterial und die Abdichtbahn mit den Befestigungselementen 90 mechanisch fixiert und die Befestigungsstelle abgedichtet ist.

### BEZUGSZEICHENLISTE

- 1: Abdichtteller
- 2: Abdichtteller
- 3: Abdichtteller
- 4: Abdichtteller
- 5: Abdichtteller
- 6: Abdichtteller
- 11: Tellerunterseite von 1 bis 6
- 12: Kammer von 1 bis 6
- 13: Tellerrand von 1 - 6
- 14: Radialnut in 13
- 15: Radialnut in 13
- 16: Erhebung von 1 bis 6
- 21: Kammerscheitel von 2 bis 6
- 22: Zapfen von 2
- 32: Zapfen von 3
- 33: Ring auf 32
- 34: Ring auf 32
- 35: Ring auf 32
- 42: Zapfen von 4
- 44: Zapfenhals von 42
- 52: Zapfen von 5
- 53: Retentionsmittel von 5
- 54: Absatz auf 52
- 55: Erhebungen
- 62: Zapfen von 6
- 63: Vertiefungen in 6
- 64: Erhebungen auf 13 von 6
- 70: Kunststoffhalter
- 71: Schraube
- 72: Hohlschaft von 70
- 73: Kopfplatte von 70
- 74: Schraubenkopf von 71
- 75: Ringschulter in 70
- 76: Schraubenschaft von 71
- 77: Bohrspitze von 71
- 80: Dübelvorsatz
- 81: Rippen von 80
- 90: Befestigungselement
- 101: Dämmmaterial
- 102: Abdichtung / Abdichtbahn
- 103: Dachuntergrund (Stahltrapezblech)
- 104: Dachuntergrund (Beton)
- 105: Sackloch in 104
- 110: Montagehilfsvorrichtung
- 111: Kurbel von 110
- 112: Aufnahme von 110
- 113: Kluppe von 110
- 114: Rändelmutter von 110
- 115: Bolzen von 110
- 116: Rotationsachse von 110
- 121: Flasche
- 122: Auslassöffnung von 121
- 123: Flaschenachse
- 130: Befestigungselement

## Patentansprüche

1. Anordnung für die trittsichere und/oder trittfeste mechanische Befestigung von Dämmmaterialien (10) und Dichtungsbahnen (102) auf Flachdächern außerhalb des Bahnensaumbereiches, bestehend aus einer Abdichtbahn und einem Befestigungselement zur Befestigung der Abdichtbahn auf einem Dämmmaterial, wobei das Befestigungselement besteht aus einem
Abdichtteller (1-6) und einem Kunststoffhalter (70) mit Hohlschaft (72) und angeformter Kopfplatte (73) und einer im Hohlschaft (72) eingesetzten Schraube (71), die sich mit ihrem Schraubenkopf (74) innerhalb des Hohlschaftes (72) abstützt und deren Schraubenspitze (77) aus dem der Kopfplatte (73) fernen Ende des Hohlschaftes (72) austritt und unter Anpressung des Dämm- und Dichtungsmaterials in den Dachuntergrund (103) oder in einen in den Dachuntergrund (104) einsetzbaren Dübel (80) eingreifbar ist,
- wobei der Abdichtteller (1-6) auf den in Verwendung im Dachaufbau sitzenden Kunststoffhalter (70) aufgesetzt ist
-- dabei die Kopfplatte (73) des Kunststoffhalters (70) vollständig einbettet
-- und zumindest mit seinem die Kopfplatte (73) des Kunststoffhalters (70) radial umgebenden Tellerrand (13) mit dem Abdichtmaterial (102) der Abdichtbahn wasserdicht verschweißt und /oder verklebt ist und dass der Abdichtteller (1-6) auf seiner Unterseite einen zentralen Zapfen (22, 32, 42, 52, 62) besitzt, der koaxial in den Hohlschaft (72) des Kunststoffhalters (70) eingeführt ist,
**dadurch gekennzeichnet, daß** der Abdichtteller aus einem flexibelen biegeelastischem Material besteht und / oder flexibele biegeelastische Tellerabschnitte besitzt, und daß der Abdichtteller (1-6) frei um die mit dem Kunststoffhalter (70) gemeinsame Längsachse rotierbar ist, und einfach auf dem Kunstoffhalter aufgesetzt ist ohne eine Schraubbewegung auszuführen, und daß der Abdichtteller eine Komposit ausführung ist, bei dem das flexible Tellermaterial und/oder die flexiblen Tellerabschnitte aus dem gleichen Material wie die Abdichtbahn bestehen.

2. Anordnung nach Anspruch 1, **dadurch gekennzeichnet, dass** der Abdichtteller form- und/oder kraftschlüssig mit der Kopfplatte verbindbar ist.

3. Anordnung nach mindestens einem der vorgehenden Ansprüche, **dadurch gekennzeichnet, dass** der Zapfen (22) ein zylindrischer Stift ist.

4. Anordnung nach mindestens einem der vorgehenden Ansprüche, **dadurch gekennzeichnet, dass** der Zapfen (42) konisch ausgebildet ist.

5. Anordnung nach mindestens einem der vorgehenden Ansprüche, **dadurch gekennzeichnet, dass** der Zapfen (32) auf seinem Außenumfang mindestens einen Ring (33, 34, 35) aufweist.

6. Anordnung nach mindestens einem der vorgehenden Ansprüche, **dadurch gekennzeichnet, dass** der Zapfen (52) mit im Hohlschaft (72) des Kunststoffhalters (70) angeordnete Vorsprünge und/oder Vertiefungen korrespondierende Retentionsmittel (53) (54) besitzt.

7. Anordnung nach mindestens einem der vorgehenden Ansprüche, **dadurch gekennzeichnet, dass** der Abdichtteller (1-6) mit seiner die Kopfplatte (72) des Kunststoffhalters (70) radial umgebenden Unterseite des Tellerrandes (13) eine Auflagefläche zur Abdichtbahn bildet und in der Unterseite des Tellerrandes mindestens ein Kanal (14,15) für die Aufnahme von Klebe- oder Lösungsmittel verläuft.

8. Anordnung nach mindestens einem der vorgehenden Ansprüche, **dadurch gekennzeichnet, dass** der Abdichtteller (1-6) auf seiner der Abdichtbahn fernen Oberfläche eine zum Rotationsantrieb geeignete Struktur besitzt.

9. Anordnung nach mindestens einem der vorgehenden Ansprüche, **dadurch gekennzeichnet, dass** der Abdichtteller (6) auf seiner über die Kopfplatte überragenden, zur Abdichtbahn hinweisenden Unterseite des Tellerrandes (13), gegen die Rotationsrichtung ausgerichtete Erhebungen (64) besitzt.

## Claims

1. Arrangement for the fastening of insulating materials (10) and waterproof sheeting (102) providing secure footing on flat roofs outside the area of the sheeting seam consisting of a seal sheeting and a fastening member for fastening the seal sheeting on an insulating material whereby the fastening member consists of
a sealing plate (1-6) and a plastic holder (70)with hollow shaft (72) and moulded-on top flange plate (73) and a screw (71) inserted in the hollow shaft (72) supporting itself with its bolt head (74) within the hollow shaft (72) and the screw tip (77)of which comes out of the end of the hollow shaft (72) being far from the top flange plate (73)and is able to engage in the roof base (103) or in a dowel (80) to be inserted in the roof base(104) pressing the insulating and sealing material
whereby the sealing plate (1-6)is put on the plastic holder (70)being seated in the overall thickness of the roof
embedding the top flange plate (73) of the plastic holder (70) completely
and is welded and/or glued together waterproof with the sealing material (102)of the waterproof sheeting at least with its plate edge (13)radially surrounding the top flange plate (73) of the plastic holder (70)
and that the sealing plate (1-6) has a central pivot on its bottom side (22, 32, 42, 52, 62)which is coaxially inserted in the hollow shaft (72)of the plastic holder (70)
wherein the sealing plate consists of a flexible pliable material and/or has flexible pliable plate sections and that the sealing plate (1-6) is freely rotatable around the longitudinal axis common with the plastic holder (70)and is simply put on the plastic holder without making any screwing movement and that
the sealing plate is a composite construction in which the flexible plate material and/or the flexible plate sections consist of the same material as the waterproof sheeting

2. Arrangement according to claim 1 wherein the sealing plate is connectable in a positive configuration and/or a frictional connection.

3. Arrangement according to at least one of the previous claims wherein the pivot (22) is a cylindrical pin.

4. Arrangement according to at least one of the previous claims wherein the pivot (42) is cone shaped.

5. Arrangement according to at least one of the previous claims wherein the pivot (32) shows at least one ring (33,34,35) on its outer perimeter.

6. Arrangement according to at least one of the previous claims wherein the pivot (52) has retaining means (53) (54) corresponding to projections and/or impressions arranged in the hollow shaft (72) of the plastic holder (70)

7. Arrangement according to at least one of the previous claims wherein the sealing plate (1-6) with the bottom side of the plate edge (13) radially surrounding the top flange plate (72) of the plastic holder (70) forms a bearing surface to the waterproof sheeting and in the bottom side of the plate edge is at least one duct (14, 15) for taking up adhesives or solvents.

8. Arrangement according to at least one of the previous claims wherein the sealing plate (1-6) has a structure appropriate for a rotation drive on the surface far from the waterproof sheeting

9. Arrangement according to at least one of the previous claims wherein the sealing plate (6)has elevations (64) directed against the direction of rotation on the bottom side of the plate edge (13) exceeding the top flange plate pointing to the waterproof sheeting.

## Revendications

1. Dispositif pour la fixation mécanique antidérapant de matériaux isolants (10) et de bandes d'étanchéité (102) sur des toits plats hors de la bordure des bandes, comprenant une bande d'étanchement et un élément de fixation aux fins de fixer la bande d'étanchement sur un matériau isolant, l'élément de fixation comprenant
une assiette d'étanchement (1-8) et un support en plastique (70) avec tige forée de rivet (72) et semelle de recouvrement formée (73) et vis (71) positionnée dans la tige forée de rivet (72), soutenue moyennant la tête de vis (74) de la tige forée de rivet (72) et dont la tête de vis (77) sort de l'extrémité de la tige forée de rivet (72), éloignée de la semelle de recouvrement (73), et peut être encliquetée, en pressant sur le matériau d'isolation et d'étanchéité, dans la base du toit (103) ou dans une cheville (80) fixable dans la base du toit (104),
- **caractérisé en ce que** l'assiette d'étanchement (1-6) est positionnée dans le support en plastique située sur l'élément de toit et
- **en ce que** la semelle de recouvrement (73) du support en plastique (70) est totalement encastrée et
est soudée et/ou collée de manière étanche moyennant le matériel d'étanchement (102) au moins avec la bordure d'assiette (13) entourant de manière radiale la semelle de recouvrement (73) du support en plastique (70)
et **en ce que** l'assiette d'étanchement (1-6) possède sur son côté inférieur une cheville centrale (22, 32, 42, 52, 62), introduite de manière coaxiale, dans la tige forée de rivet (72) du support en plastique (70),
et **caractérisé en ce que** l'assiette d'étanchement se compose d'un matériau flexible souple et élastique et/ou possède des sections d'assiettes flexibles, souples et élastiques et **en ce que** la table d'étanchement (1-6) tourne librement autour de l'axe longitudinal commun avec le support en plastique (70) et repose simplement sur le support en plastique sans qu'un mouvement de vis ne soit nécessaire et
**en ce que** l'assiette d'étanchement est un modèle composite, où le matériau flexible de la table et/ou les sections de la table flexibles se composent du même matériau que la bande d'étanchement,

2. Dispositif selon revendication 1, **caractérisé en ce que** l'assiette d'étanchement peut être reliée de manière mécanique et/ou entraînée par ressort avec la semelle de recouvrement.

3. Dispositif selon au moins l'une des revendications susmentionnées, **caractérisé en ce que** la cheville (22) est une cheville cylindrique.

4. Dispositif selon au moins l'une des revendications susmentionnées, **caractérisé en ce que** la cheville (42) est de forme conique.

5. Dispositif selon au moins l'une des revendications susmentionnées, **caractérisé en ce que** la cheville (32) présente, sur sa circonférence extérieure, au moins un anneau (33, 34, 35).

6. Dispositif selon au moins l'une des revendications susmentionnées, **caractérisé en ce que** la cheville (52) présente pour les saillies et/ou les renfoncements de la tige forée de rivet (72) du support en plastique (70) des moyens de rétentions correspondants (53) (54).

7. Dispositif selon au moins l'une des revendications susmentionnées, **caractérisé en ce que** l'assiette d'étanchement (1-6) forme, avec la partie inférieure de la bordure de table (13) entourant de manière radiale la semelle de recouvrement (72) du support en plastique (70), une surface d'appui en direction de la bande d'étanchement et traverse, au niveau de la partie inférieure de la bordure de table, au moins un canal (14,15) pour la réception des colles et des solvants.

8. Dispositif selon au moins l'une des revendications susmentionnées, **caractérisé en ce que** l'assiette d'étanchement (1-6) possède, sur la surface éloignée de la bande d'étanchement, une structure adaptée à l'actionnement par rotation.

9. Dispositif selon au moins une des revendications susmentionnées, **caractérisé en ce que** l'assiette d'étanchement (6) possède, sur la partie inférieure de la bordure de table (13) orientée vers la bande d'étanchement et dépassant la semelle de recouvrement, des élévations (64) orientées contre le sens de rotation.
